# EUROPÄISCHE PATENTANMELDUNG

(11) **EP 3 097 777 A1**
(43) Veröffentlichungstag der Anmeldung: **30.11.2016**
(21) Anmeldenummer: 16168907.0
(22) Anmeldetag: 10.05.2016
(51) Int. Cl.: A01K 1/02

(54) **TRAGEVORRICHTUNG FÜR HAUSTIERE**

(30) Priorität: 20.05.2015 DE 202015102587 U
(71) Anmelder: Neugebauer, Jörg, 33689 Bielefeld (DE)
(72) Erfinder: Neugebauer, Jörg, 33689 Bielefeld (DE)
(74) Vertreter: Dantz, Jan Henning

(57) **Zusammenfassung**

Die Erfindung betrifft eine Tragevorrichtung (1) für mehrbeinige Haustiere (20), insbesondere Hunde oder Katzen, aufweisend ein Bodenteil (2) sowie jeweilige sich an gegenüberliegenden Seitenränder des Bodenteils (2) anschließende Seitenwände (3) zur Aufnahme eines Rumpfes (21) des Haustiers (2), an den Seitenwänden (3) angeordnete Griffelemente (4), wobei das Bodenteil (2) mehrere Ausnehmungen (6) aufweist, durch die jeweils ein Bein (22) des Haustieres (20) durchführbar ist, wobei im Bereich jeder der Ausnehmungen (6) des Bodenteils (2) eine sich von den Seitenwänden (3) weg erstreckende Beinaufnahme (5) mit einem Trittflächenteil (51) angeordnet ist.

## Beschreibung

Die vorliegende Erfindung betrifft eine Tragevorrichtung für Haustiere, insbesondere für Hunde oder Katzen gemäß dem Oberbegriff des Anspruchs 1.

Derartige Tragevorrichtungen für Haustiere dienen dazu, ein Haustier, beispielsweise einen kleineren Hund oder auch eine Katze, ein Meerschweinchen oder dergleichen bei einem Spaziergang, beim Treppensteigen oder allgemein fußläufig in einfacher Weise transportieren zu können, wobei das Haustier in der Tragvorrichtung gegen Herausfallen oder Herausspringen sicher gehalten ist.

Eine gattungsgemäße Tragevorrichtung ist beispielsweise aus der DE 295 14 735 U1 bekannt. Die hier offenbarte Tragehilfe besteht im Wesentlichen aus einer Matte mit zwei Tragegriffen, wobei der Rumpf des Haustiers seitlich und von unten in der Matte aufgenommen ist. Die Länge der Matte in Längsrichtung des Haustiers ist dabei so bemessen, dass die Beine Haustiers vor beziehungsweise hinter der Matte nach unten hervorstehen, so dass das Haustier im Wesentlichen mit seinem Rumpf auf der Matte aufliegend gehalten ist.

Problematisch bei diesem aus dem Stand der Technik bekannten Tragevorrichtungen ist, dass das Gewicht des Tieres alleine durch den Boden einer solchen Matte getragen wird, wobei sich aufgrund des vorstehenden Brustkorbes des Haustieres eine Fehlhaltung des Rückens des Haustieres ergeben kann.

Aufgabe der vorliegenden Erfindung ist es, eine Tragevorrichtung für Haustiere, insbesondere für kleinere Hunde oder Katzen, bereitzustellen, mit der ein sicherer Transport des Haustieres bei gerader Rückenhaltung ermöglicht ist.

Diese Aufgabe wird durch eine Tragevorrichtung für Haustiere mit den Merkmalen des Anspruchs 1 gelöst.

Die erfindungsgemäße Tragevorrichtung weist ein Bodenteil sowie jeweilige sich an gegenüberliegenden Seitenwänden des Bodenteils anschließende Seitenwände zur Aufnahme eines Rumpfes eines Haustieres auf. An den Seitenwänden sind Griffelemente angeordnet, mit denen die Tragevorrichtung mit oder ohne Haustier getragen werden kann. Das Bodenteil weist mehrere Ausnehmungen auf, durch die jeweils ein Bein des Haustieres durchführbar ist. Im Bereich jeder der Ausnehmungen des Bodenteils ist eine sich von den Seitenwänden wegerstreckende Beinaufnahme mit einem Trittflächenteil angeordnet.

Mit einer solchen Beinaufnahme mit Trittflächenteil ist es ermöglicht, dass sich das Haustier nicht nur mit seinem Rumpf am Bodenteil der Tragevorrichtung abstützt, sondern auch mit seinen Pfoten auf dem Trittflächenteil der Beinaufnahme quasi stehend in der Tragevorrichtung transportierbar ist, wobei durch den stehenden Transport des Haustieres eine natürliche Rückenhaltung gewährleistet ist.

Als kleinerer Hund wird hier ein Hund mit einer Länge von nicht mehr als 60cm und einer Masse von nicht mehr als 12kg bezeichnet. Prinzipiell eignet sich die Tragevorrichtung auch für größere Haustiere, allerdings ist das Tragen des Tieres durch eine Person dann erschwert.

Vorteilhafte Ausführungsvarianten der Erfindung sind Gegenstand der Unteransprüche.

Gemäß einer vorteilhaften Ausführungsvariante der Erfindung sind die Beinaufnahmen als Taschen ausgebildet. Denkbar ist auch eine bügelartige Ausbildung der Beinaufnahmen. Die taschenartige Ausbildung der Beinaufnahmen hat insbesondere im Winter den Vorteil, dass die Pfoten witterungsgeschützt in den Taschen aufgenommen sind.

Nach einer weiteren vorteilhaften Ausführungsvariante ist in jeder der Beinaufnahmen wenigstens eine Einlage zur Anpassung der Trittflächenhöhe eingelegt. Dadurch ist in einfacher Weise eine Trittflächenhöhenanpassung der Beinaufnahmen ermöglicht, so dass der Abstand der Stützfläche für die Pfoten beispielsweise eines Dackels vom Bodenteil, auf dem der Rumpf des Tieres aufliegt, an die Beinlänge des Tieres derart anpassbar, dass das Haustier einen Teil seines Eigengewichts über seine Beine auf die Trittflächen der Beinaufnahmen abtragen kann.

Bevorzugt sind Seitenwände der Beinaufnahme senkrecht zum Bodenteil faltbar ausgebildet. Dadurch ist ermöglicht, dass im Nichtgebrauchszustand der Tragevorrichtung die Beinaufnahmen an das Bodenteil der Tragevorrichtung angedrückt festgelegt werden können. Die Beinaufnahmen sind dabei vorzugsweise mit faltenbalgartigen Seitenwänden ausgebildet.

Besonders bevorzugt sind die Beinaufnahmen über eine Längenverstelleinrichtung am Bodenteil oder an den Seitenwänden längenverstellbar arretierbar, so dass auch über eine solche Längenverstelleinrichtung die Längserstreckung der Beinaufnahmen variabel an die Beinlänge des Haustieres anpassbar und variabel einstellbar ist.

Gemäß einer weiteren bevorzugten Ausführungsvariante der Erfindung ist auf einer von den Beinaufnahmen abgewandten Innenfläche des Bodenteils wenigstens eine Polsterschicht aufgebracht, die eine bequeme Auflage des Rumpfes des Haustieres auf dem Bodenteil der Tragevorrichtung gewährleistet.

Auf zumindest einer Teilfläche einer der Innenfläche des Bodenteils abgewandten Oberseite der Polsterschicht ist gemäß einer weiteren Ausführungsvariante der Erfindung einer Gelschicht aufgebracht. Mit dieser Gelschicht, die sich beim Auflegen des Rumpfes des Haustieres an die Kontur des Rumpfes anpasst, ist eine nochmalige Verbesserung hinsichtlich der Auflage des Rumpfes des Haustieres und einer Verbesserung der Rückenhaltung ermöglicht.

Nachfolgend werden Ausführungsbeispiele der Erfindung anhand der beiliegenden Zeichnungen näher erläutert. Es zeigen:
- Figur 1: eine schematische Darstellung einer Ausführungsvariante einer erfindungsgemäßen Tragevorrichtung mit darin gehaltenem Haustier in einer Seitenansicht,
- Figuren 2 und 3: schematische Seitenansichten der Tragevorrichtung mit ausgefahrenen Beinaufnahmen (Figur 2) beziehungsweise eingefahrenen Beinaufnahmen (Figur 3),
- Figur 4: eine schematische Frontansicht der Tragevorrichtung,
- Figur 5: eine Draufsicht auf ein Bodenteil der Tragevorrichtung und
- Figur 6: eine schematische Detailansicht eines Ausschnitts des Bodenteils in einer Seitenansicht.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Tragevorrichtung, des Bodenteils, der Beinaufnahmen, des Trittflächenteils, der Griffelemente und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

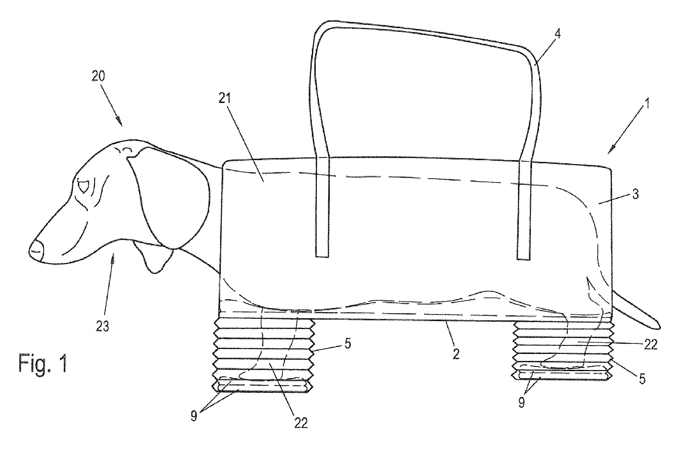

In der Figur 1 ist mit dem Bezugszeichen 1 insgesamt eine Tragevorrichtung für Haustiere 20, insbesondere Hunde oder Katzen bezeichnet.

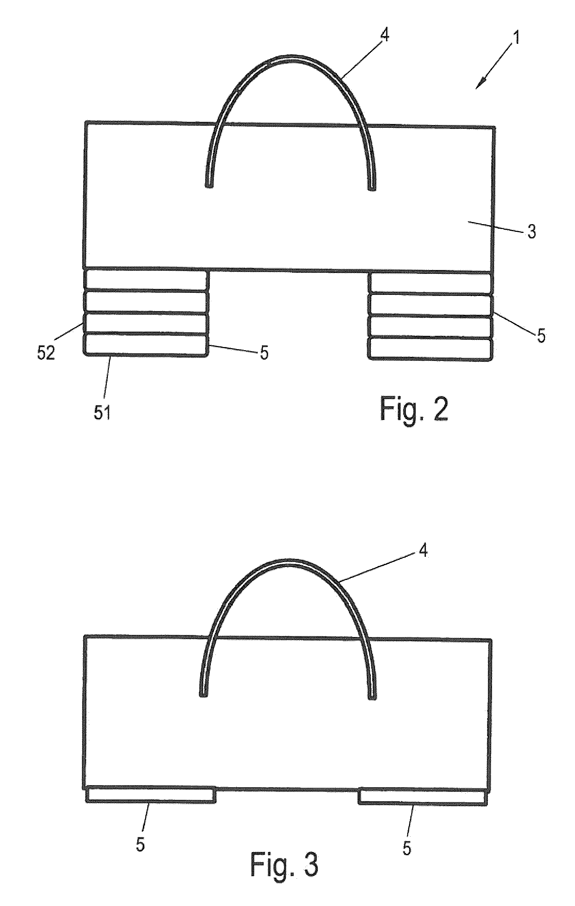

Die Tragevorrichtung weist, wie auch in den Figuren 2 bis 5 dargestellt ist, ein Bodenteil 2 auf, an das sich an gegenüberliegenden Seitenrändern Seitenwände 3 zur Aufnahme eines Rumpfes 21 des Haustieres anschließen.

Das Bodenteil 2 und die Seitenwände 3 sind dabei bevorzugt einstückig ausgebildet, beispielsweis in Gestalt eines vorzugsweise rechteckigen Stoff- oder Lederstückes. Denkbar ist aber auch eine mehrteilige Ausbildung, bei der die Seitenwände am Bodenteil befestigt, beispielsweise vernäht oder angeknöpft sind.

An jeder der Seitenwände 3 ist ein Griffelement 4 angeordnet. Dieses Griffelement 4 ist dabei vorzugsweise als Trageriemen ausgebildet, der an einer Seitenwand 3 befestigt, insbesondere vernäht oder mit Druckknöpfen oder dergleichen festgelegt ist. Denkbar ist auch, in den Seitenwänden 3 Griffausnehmungen vorzusehen, mit denen die Tragevorrichtung mit der Hand einer Person aufgenommen werden kann.

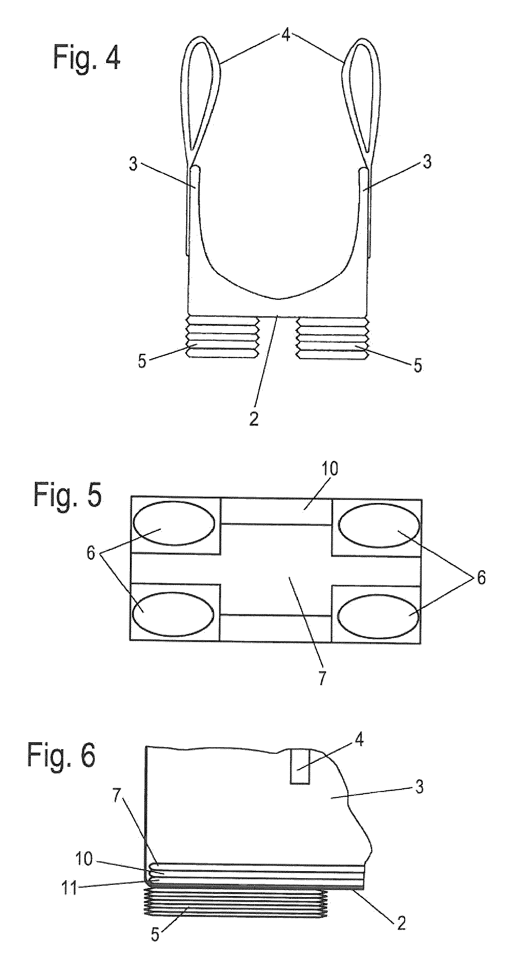

Wie in den Figuren 1 und 5 gezeigt ist, weist das Bodenteil 2 mehrere Ausnehmungen 6 auf, durch die jeweils ein Bein 22 des Haustieres 20 durchführbar ist. Dadurch ist ermöglicht, dass der Rumpf 21 des Haustiers auf dem Bodenteil 2 der Tragevorrichtung 1 aufliegen kann, ohne dass das Haustier 20 seine Beine 22 anwinkeln muss, so dass das Haustier 20 in einer Stehposition in der Tragevorrichtung 1 aufgenommen ist.

Um eine natürliche Rückenhaltung beibehalten zu können, ist im Bereich jeder der Ausnehmungen 6 des Bodenteils 2 eine sich von den Seitenwänden 3 wegerstreckende Beinaufnahme 5 mit einem Trittflächenteil 51 angeordnet. Das Haustier 20 kann sich dabei mit seinen Pfoten auf den Trittflächenteilen 51 der Beinaufnahme 5 zusätzlich abstützen und dadurch stehend mit der Tragevorrichtung 1 transportiert werden.

Die Beinaufnahmen 5 sind in der in den Figuren 1 bis 4 und 6 gezeigten Ausführungsvariante als Taschen ausgebildet, welche die Ausnehmungen 6 nach unten verschließen.

Denkbar ist auch, die Beinaufnahmen 5 beispielsweise bügelartig auszubilden. Wichtig ist dabei das Trittflächenteil 51, auf das sich das Haustier 20 mit einer Pfote abstützen bzw. aufstellen kann.

Zur Anpassung der Beinaufnahmen 5 an unterschiedliche Beinlängen der zu transportierenden Haustiere 20 ist in jede der Beinaufnahmen 5 wenigstens eine Einlage 9 zur Anpassung der Trittflächenhöhe eingelegt.

Je nach Beinlänge des Haustieres 20 ist es auch denkbar mehrere solcher Einlagen 9 in die jeweiligen Beinaufnahmen 5 einzulegen. Denkbar ist auch unterschiedlich dicke Einlagen 9 bereitzustellen.

Die Einlagen 9 sind dabei bevorzugt kissenartig ausgebildet. Dadurch können sich die die Einlagen 9 an den jeweiligen Trittdruck des Haustieres 20 anpassen.

Die Seitenwände 52 der Beinaufnahmen sind bevorzugt senkrecht zum Bodenteil 2 mit einer Faltung 8 versehen, um die Seitenwandlänge variieren zu können. Besonders bevorzugt sind die Beinaufnahmen 5 dabei mit faltenbalgartigen Seitenwänden 52 ausgebildet. Dadurch ist ermöglicht, dass bei Nichtgebrauch der Tragevorrichtung die Beinaufnahmen 5 an das Bodenteil 2 der Tragevorrichtung 1 im zusammengefalteten Zustand angedrückt und an diesem fixiert werden können.

Auch beim Aufstellen der Tragevorrichtung 1 auf einem Boden werden die Beinaufnahmen 5 an das Bodenteil 2 der Tragevorrichtung 1 angedrückt, was den selbstständigen Einstieg des Haustiers 20 in die Tragevorrichtung 1 erleichtert.

Denkbar ist auch, in den Seitenwänden der Beinaufnahmen 5 Federelemente vorzusehen, die bei Nichtgebrauch der Tragevorrichtung die Trittflächenteile 51 der Beinaufnahmen 5 an die Unterseite des Bodenteils 2 heranziehen oder andrücken.

Denkbar ist auch, die Beinaufnahmen über eine Längenverstelleinrichtung am Bodenteil 2 oder an den Seitenwänden 3 längenverstellbar zu arretieren. Eine solche Längenverstelleinrichtung weist vorzugsweise mehrere Riemen auf die einen Ends im Bereich des Trittflächenteils 51 an der Beinaufnahme 5 und anderen Ends an dem Bodenteil 2 oder an den Seitenwänden 3 befestigbar sind. Als verstellbare Befestigung dienen dazu beispielsweise in unterschiedlichen Abständen voneinander positionierte Druckknöpfe, an denen die Riemen der Längenverstelleinrichtung befestigbar sind. Damit ist in einfacher Weise eine Längenverstellung der Beinaufnahmen 5 ermöglicht, die eine Anpassung der Länge der Beinaufnahmen 5 an die Länge der Beine 22 des Haustiers 20 ermöglicht.

Um dem Haustier 20 eine möglichst bequeme Liegefläche am Bodenteil 2 der Tragevorrichtung 1 zubereiten, ist auf einer von den Beinaufnahmen 5 abgewandten Innenfläche des Bodenteils 2 wenigstens eine Polsterschicht 10 aufgebracht. Die Polsterschicht 10 ist dabei bevorzugt als Schaumstoffschicht ausgebildet.

Besonders bevorzugt ist zumindest auf einer Teilfläche einer der Innenflächen des Bodenteils 2 abgewandten Oberseite der Polsterschicht 10 eine Gelschicht 7 aufgebracht. Diese Gelschicht 7 erstreckt sich dabei bevorzugt wie in Figur 5 dargestellt kreuzförmig zwischen den Ausnehmungen 6 des Bodenteils 2.

Unter der Polsterschicht kann zusätzlich noch ein Unterboden 11 als Stützschicht eingelegt sein.

Wird das Haustier 20 in die Tragevorrichtung 1 eingesetzt, ermöglicht diese Gelschicht 7 eine gleichmäßige Druckverteilung des Gewichts insbesondere des Rumpfes 21 des Haustiers 20 auf das Bodenteil 2 der Tragevorrichtung 1.

Die Gelschicht 7 ist dabei besonders bevorzugt in Gestalt eines Gelkissens auf der Oberseite der Polsterschicht 10 aufgebracht oder auf diese aufgelegt. Dieses Gelkissen ist beispielsweise über einen Klettverschluss am Bodenteil 2 oder der Polsterschicht 10 fixierbar. Durch die einfache Herausnehmbarkeit eines solchen Gelkissens ist es außerdem ermöglicht, das Gelkissen zur Temperierung zu nutzen, so dass das Gelkissen vor dem Einlegen in die Tragevorrichtung 1 beispielsweise aufgewärmt oder gekühlt in die Tragevorrichtung 1 einlegt wird, was den Komfort der Tragevorrichtung 1 für das Haustier 20 weiter erhöht.

### Bezugszeichenliste

- 1: Tragevorrichtung
- 2: Bodenteil
- 3: Seitenwand

- 4: Griffelement

- 5: Beinaufnahme
- 51: Trittfläche
- 52: Seitenwand

- 6: Ausnehmung
- 7: Gelschicht
- 8: Faltung
- 9: Einlage
- 10: Polsterschicht
- 11: Unterboden

- 20: Haustier
- 21: Rumpf
- 22: Bein

## Patentansprüche

1. Tragevorrichtung (1) für mehrbeinige Haustiere (20), insbesondere Hunde oder Katzen, aufweisend
- ein Bodenteil (2) sowie jeweilige sich an gegenüberliegenden Seitenränder des Bodenteils (2) anschließende Seitenwände (3) zur Aufnahme eines Rumpfes (21) des Haustiers (2),
- an den Seitenwänden (3) angeordnete Griffelemente (4),
- wobei das Bodenteil (2) mehrere Ausnehmungen (6) aufweist, durch die jeweils ein Bein (22) des Haustieres (20) durchführbar ist,
**dadurch gekennzeichnet, dass**
- im Bereich jeder der Ausnehmungen (6) des Bodenteils (2) eine sich von den Seitenwänden (3) weg erstreckende Beinaufnahme (5) mit einem Trittflächenteil (51) angeordnet ist.

2. Tragevorrichtung (1) nach Anspruch 1, **dadurch gekennzeichnet, dass** die Beinaufnahmen (5) als Taschen ausgebildet sind.

3. Tragevorrichtung (1) nach Anspruch 1 oder 2, **dadurch gekennzeichnet, dass** in jeder der Beinaufnahmen (5) wenigstens eine Einlage (9) zur Anpassung der Trittflächenhöhe eingelegt ist.

4. Tragevorrichtung (1) nach einem der vorstehenden Ansprüche, **dadurch gekennzeichnet, dass** Seitenwände (52) der Beinaufnahmen (5) senkrecht zum Bodenteil (2) faltbar sind.

5. Tragevorrichtung (1) nach Anspruch 4, **dadurch gekennzeichnet, dass** die Beinaufnahmen (5) mit faltenbalgartigen Seitenwänden (52) ausgebildet sind.

6. Tragevorrichtung (1) nach Anspruch 4 oder 5, **dadurch gekennzeichnet, dass** die Beinaufnahmen (5) über eine Längenverstelleinrichtung am Bodenteil (2) oder an den Seitenwänden (3) längenverstellbar arretierbar sind.

7. Tragevorrichtung (1) nach einem der vorstehenden Ansprüche, **dadurch gekennzeichnet, dass** auf einer von den Beinaufnahmen (5) abgewandten Innenfläche des Bodenteils (2) wenigstens eine Polsterschicht (10) aufgebracht ist.

8. Tragevorrichtung (1) nach Anspruch 7, **dadurch gekennzeichnet, dass** die Polsterschicht (10) als Schaumstoffschicht ausgebildet ist.

9. Tragevorrichtung (1) nach Anspruch 7, **dadurch gekennzeichnet, dass** auf zumindest einer Teilfläche einer der Innenfläche des Bodenteils (2) abgewandten Oberseite der Polsterschicht (10) eine Gelschicht (7) aufgebracht ist.
